# EUROPEAN PATENT APPLICATION

(11) **EP 2 938 107 A1**
(43) Date of publication of application: **28.10.2015**
(21) Application number: 14767803.1
(22) Date of filing: 07.03.2014
(51) Int. Cl.: H04W 8/20

(54) **COMMUNICATIONS METHOD, APPARATUS, AND SYSTEM BASED ON SUBSCRIBER IDENTITY MODULE**

(30) Priority: 20.03.2013 CN 201310090186
(71) Applicant: Huawei Device Co., Ltd., Longgang District Shenzhen Guangdong 518129 (CN)
(72) Inventor: LI, Gang, Shenzhen Guangdong 518129 (CN)
(74) Representative: Goddar, Heinz J.
(86) International application number: PCT/CN2014/073089
(87) International publication number: WO 2014/146546

(57) **Abstract**

Embodiments of the present invention disclose a communications method, apparatus, and system based on a SIM card. According to the embodiments of the present invention, a SIM card of a first mobile terminal is remotely accessed by means of NFC, so as to acquire information in the SIM card, and communication is then performed according to the information in the SIM card, thereby achieving wireless communication of the SIM card, so that a communications function can be implemented, with no need to insert the SIM card into a mobile terminal by a user.

## Description

This application claims priority to Chinese Patent Application No. 201310090186.X, filed with the Chinese Patent Office on March 20, 2013, and entitled "COMMUNICATIONS METHOD, APPARATUS, AND SYSTEM BASED ON SUBSCRIBER IDENTITY MODULE", which is incorporated herein by reference in its entirety.

### TECHNICAL FIELD

The present invention relates to the field of communications technologies, and in particular, to a communications method, apparatus, and system based on a subscriber identity module (SIM, Subscriber identity module).

### BACKGROUND

With the development of communications technologies, application of a mobile terminal has become an indispensable part of people's daily life. During use of a mobile terminal, some scenarios may often appear, for example, a low battery or occurrence of a failure, which makes a user have to use another mobile terminal for communication. In the prior art, when a user uses another mobile terminal for communication due to various factors, for example, because the used mobile terminal does not store a phone number required by the user, the user usually prefers to remove a subscriber identity module (SIM, Subscriber identity module, which also refers to a SIM card) from the original mobile terminal, and then install the SIM card (that is, the SIM card of the original mobile terminal, original SIM card for short) in the used mobile terminal, so as to achieve an objective of implementing communication with the original SIM card by using the used mobile terminal.

During research and implementation of the prior art, an inventor of the present invention finds that, an implementation process of an existing solution is excessively complicated, for example, an original mobile terminal needs to be powered off first, a SIM card of the original mobile terminal is removed, an used mobile terminal is powered off, a SIM card of the used mobile terminal is removed, then the SIM card of the original mobile terminal is installed in the used mobile terminal, and the used mobile terminal is then powered on; after communication is complete, the SIM cards needs to be exchanged again. The process is very complicated, and it is extremely inconvenient for use.

### SUMMARY

Embodiments of the present invention provide a communications method, apparatus, and system based on a SIM card, which can achieve wireless communication of the SIM card, so that a user can implement a communication function, with no need to insert the SIM card into a mobile terminal.

According to a first aspect, an embodiment of the present invention provides a communications method based on a SIM card, including:
remotely accessing a SIM card of a first device by means of near field communication (NFC, Near Field Communication), so as to acquire information in the SIM card; and
performing communication according to the information in the SIM card.

With reference to the first aspect, in a first possible implementation manner, the remotely accessing a SIM card of a first device by means of NFC, so as to acquire information in the SIM card may include:
determining, by means of NFC, whether the SIM card of the first device is in position; and when it is determined that the SIM card of the first device is in position, acquiring the information in the SIM card by means of NFC.

With reference to the first aspect, in a second possible implementation manner, the performing communication according to the information in the SIM card may include:
performing network registration with a base station according to the information in the SIM card; and after the network registration succeeds, performing data transmission by using the base station.

With reference to the first aspect, in a third possible implementation manner, the performing communication according to the information in the SIM card may also include:
performing Internet data transmission according to the information in the subscriber identity module.

With reference to the first possible implementation manner, the second possible implementation manner, or the third possible implementation manner of the first aspect, in a fourth possible implementation manner, before the remotely accessing a SIM card of a first device by means of NFC, the method may further include:
obtaining a permission for remotely accessing the SIM card of the first device, which, for example, may be specifically as follows:
   sending a remote access request to the SIM card of the first device, and receiving a remote access accept permission returned by the SIM card; or
   receiving a remote access invitation sent by the SIM card of the first device, and accepting the remote access invitation.

According to a second aspect, an embodiment of the present invention further provides a communications apparatus based on a SIM card, including an access unit and a communications unit, where
the access unit is configured to remotely access a SIM card of a first device by means of NFC, so as to acquire information in the SIM card; and
the communications unit is configured to perform communication according to the information in the SIM card.

With reference to the second aspect, in a first possible implementation manner, the access unit may be specifically configured to determine, by means of NFC, whether the SIM card of the first device is in position; and when determining that the SIM card of the first device is in position, acquire the information in the SIM card by means of NFC.

With reference to the second aspect, in a second possible implementation manner, the communications unit may include a registration subunit and a transmission subunit, which may be specifically as follows:
the registration subunit is configured to perform network registration with a base station according to the information in the SIM card; and
the transmission subunit is configured to: after the network registration succeeds, perform data transmission by using the base station.

With reference to the second aspect, in a third possible implementation manner, the communications unit may be specifically configured to perform Internet data transmission according to the information in the subscriber identity module.

With reference to the first possible implementation manner, the second possible implementation manner, or the third possible implementation manner of the second aspect, in a fourth possible implementation manner, the communications apparatus based on a SIM card may further include a permission unit, which may be specifically as follows:
the permission unit is configured to obtain a permission for remotely accessing the SIM card of the first device, where
for example, the permission unit may be specifically configured to send a remote access request to the SIM card of the first device, and receive a remote access accept permission returned by the SIM card; or
the permission unit may be specifically configured to receive a remote access invitation sent by the SIM card of the first device, and accept the remote access invitation.

According to a third aspect, an embodiment of the present invention further provides a communications system, including any communications apparatus based on a SIM card according to the embodiments of the present invention.

According to the embodiments of the present invention, a SIM card of a first device is remotely accessed by means of NFC, so as to acquire information in the SIM card, and communication is then performed according to the information in the SIM card, thereby achieving wireless communication of the SIM card, so that a communications function can be implemented, with no need to insert the SIM card into a mobile terminal by a user.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person skilled in the art may still derive other drawings from these accompanying drawings without creative efforts.
FIG. 1 is a flowchart of a communications method based on a SIM card according to an embodiment of the present invention;
FIG. 2a is a schematic diagram of a scenario of a communications method based on a SIM card according to an embodiment of the present invention;
FIG. 2b is another flowchart of a communications method based on a SIM card according to an embodiment of the present invention;
FIG. 3a is a schematic diagram of another scenario of a communications method based on a SIM card according to an embodiment of the present invention;
FIG. 3b is still another flowchart of a communications method based on a SIM card according to an embodiment of the present invention;
FIG. 4a is a schematic structural diagram of a communications apparatus based on a SIM card according to an embodiment of the present invention;
FIG. 4b is another schematic structural diagram of a communications apparatus based on a SIM card according to an embodiment of the present invention; and
FIG. 5 is a schematic structural diagram of a communications system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention.

Embodiments of the present invention provide a communications method, apparatus, and system based on a SIM card, which are separately described in detail in the following.

### Embodiment 1

This embodiment is described from a perspective of a communications apparatus based on a subscriber identity module, the communications apparatus based on a subscriber identity module may be specifically a mobile terminal, and the mobile terminal may be specifically a device such as a mobile phone or a tablet computer.

A communications method based on a SIM card is provided, including: remotely accessing a SIM card of a first device by means af NFC, so as to acquire information in the SIM card; and performing communication according to the information in the SIM card.

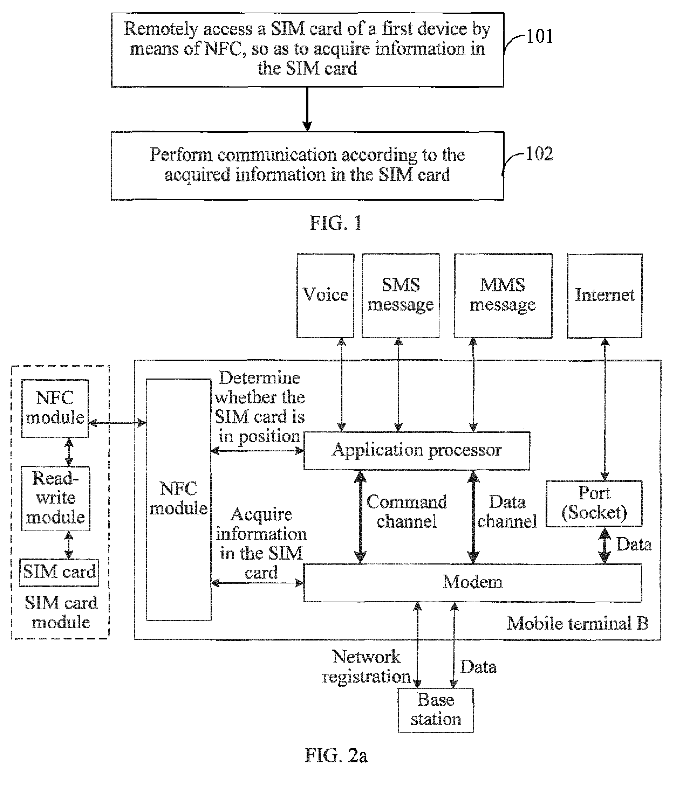

As shown in FIG. 1, a specific procedure may be as follows:
101: Remotely access a SIM card of a first device by means of near field communication (NFC, Near Field Communication), so as to acquire information in the SIM card, which, for example, may be specifically as follows:
   It is determined whether the SIM card of the first device is in position by means of NFC. If the SIM card is in position, the information in the SIM card is acquired by means of NFC. If the SIM card is not in position, the procedure is ended; and optionally, in this case, a user may be reminded that the SIM card of the first device is not in position.

The SIM card "being in position" refers to that the SIM card may be detected, that is, it is detected by means of NFC whether the SIM card exists in the first device. If the SIM card exists in the first device, it indicates that the SIM card of the first device is in position, and if the SIM card does not exist in the first device, it indicates that the SIM card of the first device is not in position.

For example, the communications apparatus based on a subscriber identity module may include an NFC module, an application processor, and a modem (Modem), where the NFC module may provide an NFC function, for example, the NFC module may be specifically an NFC chip; the application processor may be connected to the modem through a serial port or a USB. The modem is mainly used to acquire the information in the SIM card (which includes acquiring information in a SIM card of the communications apparatus, and remotely accessing information in another SIM card by using the NFC module), and communicate with a base station according to the information in the SIM card; the application processor is mainly used to process various terminal applications or services; the modem may deliver a control command to the application processor through a command (Command) channel, or receive, through a command channel, a control command sent by the application processor; and data transmission between the modem and the application processor may be implemented through a data (DATA) channel.

If the communications apparatus based on a subscriber identity module includes the NFC module, the application processor, and the modem, specifically, the application processor may determine, by using the NFC module, whether the SIM card of the first device is in position. If the SIM card is in position, the application processor triggers the modem, and the modem acquires the information in the SIM card by the using the NFC module.

It should be noted that, the first device may be specifically a SIM card module to which a SIM card can be loaded, that is, the SIM card module may include a read-write module and an NFC module, so that the SIM card module has functions of reading/writing the SIM card and performing NFC communication. The read-write module and the NFC module may be implemented in multiple forms, for example, the read-write module may be specifically a slot into which the SIM card is inserted, and the NFC module may be specifically an NFC chip. The SIM card module may be independent of a mobile terminal (referring to another mobile terminal different from the execution body of this embodiment), or may be integrated in a mobile terminal (referring to another mobile terminal different from the execution body of this embodiment).

In addition, it should be further noted that, because the NFC is a near field high-frequency wireless communications technology, a distance between the communications apparatus based on a subscriber identity module and the first device should be kept within a range in which the NFC can be implemented, for example, the distance between the communications apparatus based on a subscriber identity module and the first device may be kept within 10 cm, and for another example, the communications apparatus based on a subscriber identity module may be leaned against the first device.
102: Perform communication according to the information that is in the SIM card and is acquired in step 101, which, for example, may be specifically as follows:

Network registration is performed according to the information in the SIM card by using the base station, and after the network registration succeeds, data transmission is performed by using the base station; and/or, Internet data transmission may also be performed according to the information in the subscriber identity module.

For example, if the communications apparatus based on a subscriber identity module includes an NFC module, an application processor, and a modem, specifically, the modem may perform network registration according to the information in the SIM card by using the base station, and after the network registration succeeds, the application processor may perform data transmission (that is, data exchange) with the base station by using the modem; and/or, the application processor performs data transmission (that is, data exchange) with the Internet according to the information in the SIM card by using the modem.

Data transmission may be in multiple manners, such as voice communication (making a call), SMS message communication, or MMS message communication. That is, the step of "performing data transmission by using the base station" may specifically include:
performing voice data transmission such as voice, an SMS message, or an MMS message by using the base station.

In addition, in order to strengthen protection of personal information, a specific permission may be set for the function of remotely accessing the SIM card by means of NFC, so that the SIM card can be remotely accessed by means of NFC only after the SIM card permits the remote access; that is, before the step of "remotely accessing a SIM card of a first device by means of NFC", the communications method based on a SIM card may further include:
obtaining the permission for remotely accessing the SIM card of the first device.

For example, specifically, a remote access request may be sent to the SIM card of the first device, and a remote access accept permission returned by the SIM card may be received; or
specifically, a remote access invitation sent by the SIM card of the first device may be received, and the remote access invitation may be accepted.

It can be known from the foregoing that, according to this embodiment of the present invention, a SIM card of a first device is remotely accessed by means of NFC, so as to acquire information in the SIM card, and communication is then performed according to the information in the SIM card, thereby achieving wireless communication of the SIM card, so that a communications function can be implemented, with no need to insert the SIM card into a mobile terminal by a user.

According to the method described in Embodiment 1, description is further provided in detail by using examples in the following Embodiment 2 and Embodiment 3.

### Embodiment 2

In this embodiment, description is made by using an example in which a first device is specifically a SIM card module independent of a mobile terminal A, and a communications apparatus based on a subscriber identity module is specifically a mobile terminal B.

The mobile terminal B may include an NFC module, an application processor, and a modem, which is as follows:
(1) NFC module:
   the NFC module may be specifically an NFC chip, which is used to provide an NFC function.

   For example, the NFC module may specifically receive a detection instruction which is sent by the application processor of the mobile terminal B and is used to detect whether the SIM card of the SIM card module is in position, send the detection instruction to the SIM card module, receive a response message that is returned by the SIM card module and is used to indicate that the SIM card is in position or a response message that is returned by the SIM card module and is used to indicate that the SIM card is not in position, and send the response message to the application processor of the mobile terminal B.
   For another example, the NFC module may specifically receive a SIM card information acquisition request sent by the modem, send the SIM card information acquisition request to the SIM card module to acquire information in the SIM card of the SIM card module, and send the acquired information in the SIM card to the modem.
(2) Modem:
   the modem is mainly used to acquire the information in the SIM card by means of NFC, and communicate with a base station according to the information in the SIM card.

   For example, the modem may specifically send the SIM card information acquisition request to the NFC module of the mobile terminal B, so that the NFC module of the mobile terminal B sends the SIM card information acquisition request to the SIM card module, and receive, by using the NFC module of the mobile terminal B, the information that is in the SIM card and returned by the SIM card module.
(3) Application processor:
   the application processor is mainly used to determine, by means of NFC, whether the SIM card of the SIM card module is in position, and when determining that the SIM card of the SIM card module is in position, trigger the modem to acquire the information in the SIM card of the SIM card module, and process various terminal applications or services.

For example, the application processor may specifically send, to the NFC module of the mobile terminal B, the detection instruction used to detect whether the SIM card of the SIM card module is in position, so that the NFC module sends the detection instruction to the SIM card module, and receive, by using the NFC module of the mobile terminal B, the response message returned by the SIM card module, where the response message indicates that the SIM card is in position or indicates that the SIM card is not in position.

The application processor may be connected to the modem through a serial port or a USB. As shown in FIG. 2a, the modem may deliver a control command to the application processor through a command channel, or receive, through a command channel, a control command sent by the application processor; and data transmission between the modem and the application processor may be implemented through a data channel.

The SIM card module may include an NFC module and a read-write module, which is as follows:
(1) NFC module:
   the NFC module may be specifically an NFC chip, which is used to provide an NFC function.

   For example, the NFC module may specifically receive a detection request that is sent by the mobile terminal B and used to detect whether the SIM card of the SIM card module is in position, and return a response message to the mobile terminal B, where the response message indicates that the SIM card is in position or indicates that the SIM card is not in position.
   For another example, the NFC module may specifically receive a SIM card information acquisition request sent by the mobile terminal B, send the SIM card information acquisition request to the read-write module, so that the read-write module reads the information in the SIM card according to the SIM card information acquisition request, receive the information that is in the SIM card and sent by the read-write module, and send the information in the SIM card to the mobile terminal B.
(2) Read-write module:
   the read-write module is used to read/write the SIM card loaded in the SIM card module.

For example, the read-write module may specifically receive the SIM card information acquisition request forwarded by the NFC module of the SIM card module, read the information in the SIM card according to the SIM card information acquisition request, and send the information in the SIM card to the NFC module of the SIM card module, so that the NFC module of the SIM card module sends the information in the SIM card module to the mobile terminal B.

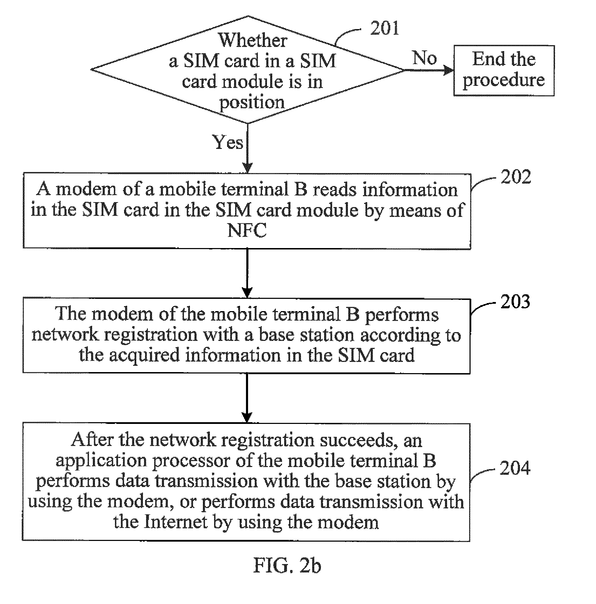

As shown in FIG. 2b, a specific procedure may be as follows:
201: An application processor of a mobile terminal B determines, by means of NFC, whether a SIM card of a SIM card module is in position; if yes, perform step 202; and if not, end the procedure; optionally, in this case, a user may be reminded that the SIM card of the SIM card module is not in position.

For example, when the mobile terminal A has no electricity, a user may remove a SIM card from the mobile terminal A and place the SIM card of the SIM card module, and then move the SIM card module to get close to the mobile terminal B; in this case, the mobile terminal B may remotely access the SIM card of the SIM card module by means of NFC, for example, determine, by means of NFC, whether the SIM card of the SIM card module is in position.

That the application processor of the mobile terminal B determines, by means of NFC, whether the SIM card of the SIM card module is in position may be specifically as follows:

The application processor of the mobile terminal B sends a detection request to the NFC module of the mobile terminal B, where the detection request indicates to determine whether the SIM card of the SIM card module is in position, after receiving the detection request, the NFC module of the mobile terminal B sends the detection request to the NFC module of the SIM card module; if the SIM card exists in a slot of the SIM card module, it is determined that the SIM card is in position, and then a response message indicating that the SIM card is in position is returned to the NFC module of the SIM card module; the NFC module of the SIM card module sends, to the NFC module of the mobile terminal B, the response message indicating that the SIM card is in position, and the NFC module of the mobile terminal B sends, to the application processor, the response message indicating that the SIM card is in position; or otherwise, if the SIM card does not exist in a slot of the SIM card module, it is determined that the SIM card is not in position, and then a response message indicating that the SIM card is not in position is returned to the NFC module of the SIM card module, the NFC module of the SIM card module sends, to the NFC module of the mobile terminal B, the response message indicating that the SIM card is not in position, and the NFC module of the mobile terminal B sends, to the application processor, the response message indicating that the SIM card is not in position.
202: A modem of the mobile terminal B reads information in the SIM card in the SIM card module by means of NFC, which, for example, may be specifically as follows:

The modem of the mobile terminal B sends a SIM card information acquisition request to the NFC module of the mobile terminal B, after receiving the SIM card information acquisition request, the NFC module of the mobile terminal B sends the SIM card information acquisition request to the NFC module of the SIM card module, the NFC module of the SIM card module sends the SIM card information acquisition request to the read-write module of the SIM card module, the read-write module reads the information in the SIM card, sends the read information in the SIM card to the NFC module of the SIM card module, the NFC module of the SIM card module sends the information in the SIM card to the NFC module of the mobile terminal B, and then the NFC module of the mobile terminal B sends the information in the SIM card to the modem of the mobile terminal B.
203: The modem of the mobile terminal B performs network registration with a base station according to the acquired information in the SIM card.
204: After the network registration succeeds, the application processor of the mobile terminal B performs data transmission with the base station by using the modem, or the application processor of the mobile terminal B may also perform data transmission with the Internet by using the modem.

For example, the mobile terminal B may perform voice data transmission, such as voice, an SMS message, or an MMS message, or the mobile terminal B may also perform Internet data transmission, so as to achieve an objective of performing communication by using the SIM card of the SIM card module. That is, the mobile terminal B may perform communication by using the SIM card of the mobile terminal A.

In addition, in order to strengthen protection of personal information, a specific permission may be set for the function of remotely accessing the SIM card by means of NFC, so that the SIM card can be remotely accessed by means of NFC only after the SIM card permits the remote access; that is, before step 201, the procedure may further include:
obtaining the permission for remotely accessing the SIM card of the SIM card module.

For example, specifically, a remote access request may be sent to the SIM card of the SIM card module, and a remote access accept permission returned by the SIM card may be received; or
specifically, a remote access invitation sent by the SIM card of the SIM card module may be received, and the remote access invitation may be accepted.

It can be known from the foregoing that, according to this embodiment of the present invention, a SIM card of a SIM card module is remotely accessed by means of NFC, so as to acquire information in the SIM card, and communication is then performed according to the information in the SIM card, thereby achieving wireless communication of the SIM card, so that a communications function can be implemented, with no need to insert the SIM card into a mobile terminal by a user. In addition, because the SIM card module only needs to take charge of reading the SIM card and performing NFC communication, the SIM card module may consume little power, and moreover, may be of a small size, so that it is convenient to carry the SIM card module.

### Embodiment 3

Different from Embodiment 2, this embodiment is described by using an example in which a SIM card module is specifically integrated in a mobile terminal A, and a communications apparatus based on a subscriber identity module is specifically a mobile terminal B.

The mobile terminal B may include an NFC module, an application processor, and a modem, which is as follows:
(1) NFC module:
   the NFC module may be specifically an NFC chip, which is used to provide an NFC function.

   For example, the NFC module may specifically receive a detection instruction which is sent by the application processor of the mobile terminal B and is used to detect whether a SIM card of the mobile terminal A is in position, send the detection instruction to the mobile terminal A, receive a response message that is returned by the mobile terminal A and is used to indicate that the SIM card is in position or a response message that is returned by the mobile terminal A and is used to indicate that the SIM card is not in position, and send the response message to the application processor of the mobile terminal B.
   For another example, the NFC module may specifically receive a SIM card information acquisition request sent by the modem, send the SIM card information acquisition request to the mobile terminal A, so as to acquire information in the SIM card of the mobile terminal A, and send the acquired information in the SIM card to the modem.
(2) Modem:
   the modem is mainly used to acquire the information in the SIM card of the mobile terminal A by means of NFC, and communicate with a base station according to the information in the SIM card.

   For example, the modem may specifically send the SIM card information acquisition request to the NFC module of the mobile terminal B, so that the NFC module of the mobile terminal B sends the SIM card information acquisition request to the mobile terminal A, and receive, by using the NFC module of the mobile terminal B, the information that is in the SIM card and returned by the mobile terminal A.
(3) Application processor:
   the application processor is mainly used to determine, by means of NFC, whether the SIM card of the mobile terminal A is in position, and when determining that the SIM card of the mobile terminal A is in position, trigger the modem to acquire the information in the SIM card of the mobile terminal A, and process various terminal applications or services.

For example, the application processor may specifically send, to the NFC module of the mobile terminal B, the detection instruction used to detect whether the SIM card of the mobile terminal A is in position, so that the NFC module sends the detection instruction to the mobile terminal A, and receive, by using the NFC module of the mobile terminal B, the response message returned by the mobile terminal A, where the response message indicates that the SIM card is in position or indicates that the SIM card is not in position.

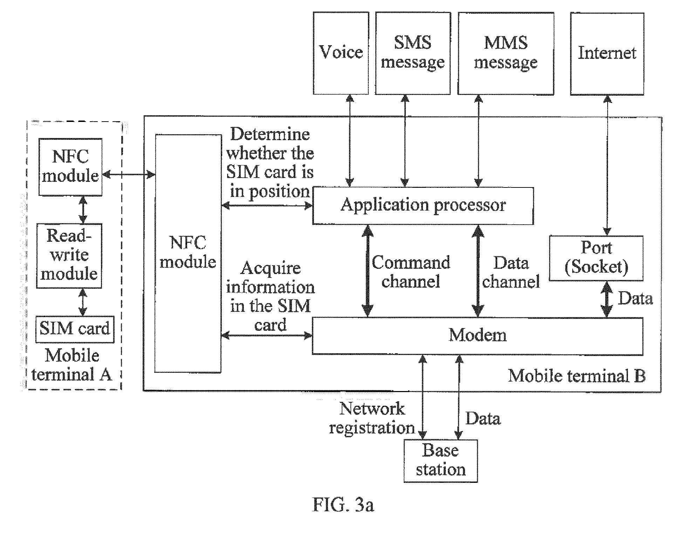

The application processor may be connected to the modem through a serial port or a USB. As shown in FIG. 3a, the modem may deliver a control command to the application processor through a command channel, or receive, through a command channel, a control command sent by the application processor; data transmission between the modem and the application processor may be implemented through a data channel.

The mobile terminal A may include an NFC module and a read-write module, which is as follows:
(1) NFC module:
   the NFC module may be specifically an NFC chip, which is used to provide an NFC function.

   For example, the NFC module may specifically receive a detection request that is sent by the mobile terminal B and used to detect whether the SIM card in the SIM card module is in position, and return a response message to the mobile terminal B, where the response message indicates that the SIM card is in position or indicates that the SIM card is not in position.
   For another example, the NFC module may specifically receive a SIM card information acquisition request sent by the mobile terminal B, send the SIM card information acquisition request to the read-write module, so that the read-write module reads the information in the SIM card according to the SIM card information acquisition request, receive the information that is in the SIM card and sent by the read-write module, and send the information in the SIM card to the mobile terminal B.
(2) Read-write module:
   the read-write module is used to read/write the SIM card loaded in the mobile terminal A.

For example, the read-write module may specifically receive the SIM card information acquisition request forwarded by the NFC module of the mobile terminal A, read the information in the SIM card according to the SIM card information acquisition request, and send the information in the SIM card to the NFC module of the mobile terminal A, so that the NFC module of the mobile terminal A sends the information in the SIM card to the mobile terminal B.

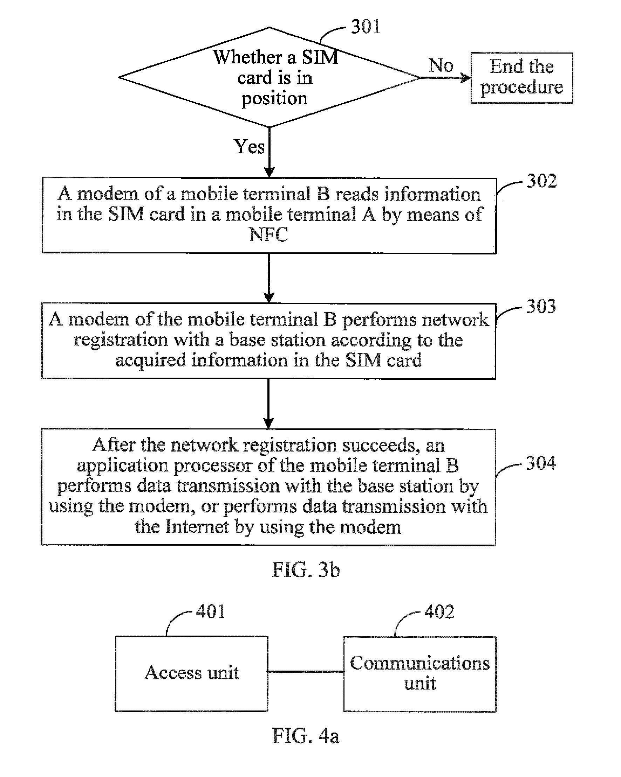

As shown in FIG. 3b, a specific procedure may be as follows:
301: An application processor of a mobile terminal B determines, by means of NFC, whether a SIM card of a mobile terminal A is in position; if yes, perform step 302; and if not, end the procedure; optionally, in this case, a user may be reminded that the SIM card of the mobile terminal A is not in position.

For example, when the mobile terminal A has a low battery, the user may switch the mobile terminal A to a power saving mode; in this case, the mobile terminal A is only responsible for reading a SIM card of the mobile terminal A, and communicates with the mobile terminal B by means of NFC, for example, the user may move the mobile terminal A to get close to the mobile terminal B. In this case, the mobile terminal B may remotely access the SIM card of the mobile terminal A by means of NFC, for example, determine, by means of NFC, whether the SIM card of the mobile terminal A is in position.

That the application processor of the mobile terminal B determines, by means of NFC, whether the SIM card of the mobile terminal A is in position may be specifically as follows:

The application processor of the mobile terminal B sends a detection request to the NFC module of the mobile terminal B, where the detection request indicates to determine whether the SIM card of the mobile terminal A is in position, after receiving the detection request, the NFC module of the mobile terminal B sends the detection request to the NFC module of the mobile terminal A, if the SIM card exists in a slot of the mobile terminal A, it is determined that the SIM card is in position, and then a response message used to indicate that the SIM card is in position is returned to the NFC module of the mobile terminal A, the NFC module of the mobile terminal A sends, to the NFC module of the mobile terminal B, the response message indicating that the SIM card is in position, and the NFC module of the mobile terminal B sends, to the application processor, the response message indicating that the SIM card is in position; or otherwise, if the SIM card does not exist in a slot of the mobile terminal A, it is determined that the SIM card is not in position, and then the response message indicating that the SIM card is not in position is returned to the NFC module of the mobile terminal A, the NFC module of the mobile terminal A sends, to the NFC module of the mobile terminal B, the response message indicating that the SIM card is not in position, and the NFC module of the mobile terminal B sends, to the application processor, the response message indicating that the SIM card is not in position.
302: A modem of the mobile terminal B reads information in the SIM card of the mobile terminal A by means of NFC, which, for example, may be specifically as follows:

The modem of the mobile terminal B sends a SIM card information acquisition request to the NFC module of the mobile terminal B, after receiving the SIM card information acquisition request, the NFC module of the mobile terminal B sends the SIM card information acquisition request to the NFC module of the mobile terminal A, the NFC module of the mobile terminal A sends the SIM card information acquisition request to the read-write module of the mobile terminal A, the read-write module reads the information in the SIM card and then sends the read information in the SIM card to the NFC module of the mobile terminal A, the NFC module of the mobile terminal A sends the information in the SIM card to the NFC module of the mobile terminal B, and then the NFC module of the mobile terminal B sends the information in the SIM card to the modem of the mobile terminal B.
303: The modem of the mobile terminal B performs network registration with a base station according to the acquired information in the SIM card.
304: After the network registration succeeds, the application processor of the mobile terminal B performs data transmission with the base station by using the modem, or the application processor of the mobile terminal B may also perform data transmission with the Internet by using the modem.

For example, the mobile terminal B may perform voice data transmission, such as voice, an SMS message, or an MMS message, or the mobile terminal B may also perform Internet data transmission, so as to achieve an objective of performing communication by using the SIM card of the mobile terminal A. That is, the mobile terminal B may perform communication by using the SIM card of the mobile terminal A.

In addition, in order to strengthen protection of personal information, a specific permission may be set for the function of remotely accessing the SIM card by means of NFC, so that the SIM card can be remotely accessed by means of NFC only after the SIM card permits the remote access; that is, before step 301, the procedure may further include:
obtaining the permission for remotely accessing the SIM card of the mobile terminal A.

For example, specifically, a remote access request may be sent to the SIM card of the mobile terminal A, and a remote access accept permission returned by the SIM card may be received; or
specifically, a remote access invitation sent by the SIM card of the mobile terminal A may be received, and the remote access invitation may be accepted.

It can be known from the foregoing that, according to this embodiment of the present invention, a SIM card of a mobile terminal A is remotely accessed by means of NFC, so as to acquire information in the SIM card, and communication is then performed according to the information in the SIM card, thereby achieving wireless communication of the SIM card, so that a communications function can be implemented, with no need to insert the SIM card into a mobile terminal by a user. In addition, because a SIM card module in the mobile terminal A only needs to take charge of reading the SIM card and performing NFC communication, the SIM card module may consume little power, and moreover, may be of a small size, so that it is convenient to carry the SIM card module.

### Embodiment 4

In order to better implement the foregoing method, this embodiment of the present invention further provides a communications apparatus based on a subscriber identity module. As shown in FIG. 4a, the communications apparatus based on a subscriber identity module includes an access unit 401 and a communications unit 402.

The access unit 401 is configured to remotely access a SIM card of a first device by means of NFC, so as to acquire information in the SIM card.

The communications unit 402 is configured to perform communication according to the information in the SIM card.

For example, the access unit 401 may be specifically configured to determine, by means of NFC, whether the SIM card of the first device is in position; and when determining that the SIM card of the first device is in position, acquire the information in the SIM card by means of NFC.

In addition, if the access unit 401 determines that the SIM card of the first device is not in position, the procedure is ended.

For example, the access unit 401 may include a detection subunit, an NFC subunit, and an acquisition subunit.

The detection subunit is configured to send, to the NFC subunit, a detection instruction used to detect whether the SIM card of the first device is in position, so that the NFC subunit sends the detection instruction to the first device; receive, by using the NFC subunit, a response message returned by the first device, where the response message indicates that the SIM card is in position or indicates that the SIM card is not in position; and if receiving the response message indicating that the SIM card is in position, trigger the acquisition subunit to send a SIM card information acquisition request to the NFC subunit.

The NFC subunit is configured to receive the detection instruction that is sent by the detection subunit and is used to detect whether the SIM card of the first device is in position, send the detection instruction to the first device, receive the response message that is returned by the first device and is used to indicate that the SIM card is in position or the SIM card is not in position, and send the response message to the detection subunit.

The NFC subunit is further configured to receive the SIM card information acquisition request sent by the acquisition subunit, send the SIM card information acquisition request to the first device, so as to acquire the information in the SIM card of the first device, and send the acquired information in the SIM card to the acquisition subunit.

The acquisition subunit is configured to send the SIM card information acquisition request to the NFC subunit, so that the NFC subunit sends the SIM card information acquisition request to the first device, and receive, by using the NFC subunit, the information that is in the SIM card and returned by the first device.

Optionally, in this case, the access unit 401 may remind a user that the SIM card of the first device is not in position.

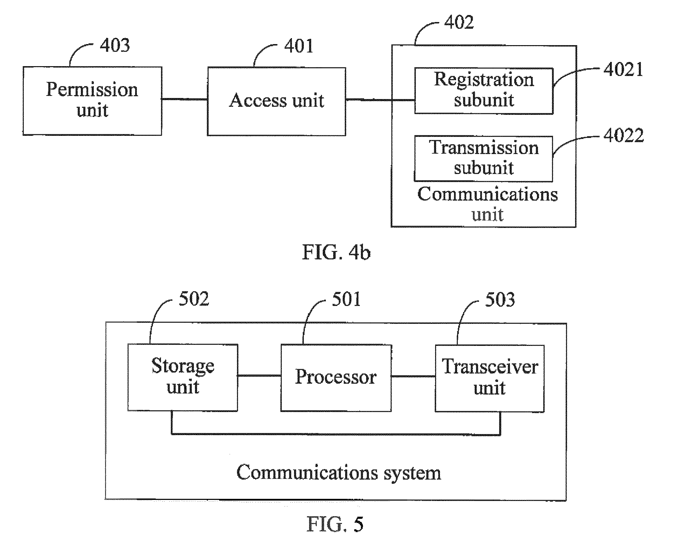

Optionally, as shown in FIG. 4b, the communications unit 402 may include a registration subunit 4021 and a transmission subunit 4022.

The registration subunit 4021 is configured to perform network registration with a base station according to the information in the SIM card.

The transmission subunit 4022 is configured to: after the network registration succeeds, perform data transmission by using the base station.

For example, the transmission subunit 4022 may be specifically configured to perform voice data transmission such as voice, an SMS message, or an MMS message by using the base station.

Optionally, besides performing data transmission such as voice, an SMS message, or an MMS message according to the information in the SIM card, the transmission subunit 4022 can also perform Internet data transmission according to the information in the subscriber identity module, that is:
the communications unit 402 may also be specifically configured to perform Internet data transmission according to the information in the SIM card.

In addition, in order to strengthen protection of personal information, a specific permission may be set for the function of remotely accessing the SIM card by means of NFC, so that the SIM card can be remotely accessed by means of NFC only after the SIM card permits the remote access; that is, as shown in FIG. 4b, the communications apparatus based on a SIM card may further include a permission unit 403.

The permission unit 403 is configured to obtain a permission for remotely accessing the SIM card of the first device, which, for example, is specifically as follows:
the permission unit 403 may be specifically configured to send a remote access request to the SIM card of the first device, and receive a remote access accept permission returned by the SIM card; or
the permission unit 403 may be specifically configured to receive a remote access invitation sent by the SIM card of the first device, and accept the remote access invitation.

It should be noted that, the communications apparatus based on a subscriber identity module may be specifically a mobile terminal, and the mobile terminal may be specifically a device, such as a mobile phone or a tablet computer. The first device may be specifically a SIM card module to which a SIM card can be loaded, and the SIM card module may be independent of a mobile terminal, or may be integrated in a mobile terminal.

In addition, it should be further noted that, because the NFC is a near field high-frequency wireless communications technology, a distance between the mobile terminal and the first device should be kept within a range in which the NFC can be implemented, for example, a distance between the mobile terminal and the first device may be kept within 10 cm, and for another example, the mobile terminal may be leaned against the first device.

During a specific implementation, the foregoing units may be implemented as independent entities, or may be randomly combined and implemented as a same entity or several entities, for example, the access unit 401 and the communications unit 402 may be specifically implemented by using an application processor and a modem. For specific implementations of the foregoing units, reference may be made to the foregoing method embodiments, and details are not described herein again.

It can be known from the foregoing that, an access unit 401 of the communications apparatus based on a subscriber identity module of this embodiment of the present invention can remotely access a SIM card of a first device by means of NFC, so as to acquire information in the SIM card, and a communications unit 402 performs communication according to the information in the SIM card, thereby achieving wireless communication of the SIM card, so that a communications function can be implemented, with no need to insert the SIM card into a mobile terminal by a user.

### Embodiment 5

Correspondingly, this embodiment of the present invention further provides a communications system, including any communications apparatus based on a SIM card according to the embodiments of the present invention, and for details, reference may be made to Embodiment 4. For example, by using an example in which the communications apparatus based on a SIM card is specifically a mobile terminal A, details may be as follows:
The mobile terminal A remotely accesses a SIM card of a first device by means of NFC, so as to acquire information in the SIM card; and performs communication according to the information in the SIM card.

In addition, the communications system may further include the first device, which is as follows:

The first device is configured to accept a remote access of the mobile terminal A, and send the information in the SIM card to the mobile terminal A by means of NFC.

Optionally, the mobile terminal A may specifically determine, by means of NFC, whether the SIM card of the first device is in position, and if the SIM card is in position, acquire the information in the SIM card by means of NFC; or otherwise, if the SIM card is not in position, end the procedure. Optionally, a user may be reminded that the SIM card of the first device is not in position.

Optionally, the mobile terminal A may be specifically configured to perform network registration with a base station according to the information in the SIM card; and after the network registration succeeds, perform data transmission by using the base station.

Data transmission may be in multiple manners, for example, voice data transmission such as voice, an SMS message, or an MMS message.

Certainly, besides performing data transmission such as voice, an SMS message, or an MMS message according to the information in the SIM card, the mobile terminal A may further perform Internet data transmission according to the information in the subscriber identity module, that is:
the mobile terminal A may also be specifically configured to perform Internet data transmission according to the information in the subscriber identity module.

In addition, in order to strengthen protection of personal information, a specific permission may be set for the function of remotely accessing the SIM card by means of NFC, so that the SIM card can be remotely accessed by means of NFC only after the SIM card permits the remote access, that is:
the mobile terminal A may be further configured to obtain the permission for remotely accessing the SIM card of the first device, which, for example, is specifically as follows:

A remote access request is sent to the SIM card of the first device, and receives a remote access accept permission returned by the SIM card; or a remote access invitation sent by the SIM card of the first device is received, and the remote access invitation is accepted.

For implementations of the foregoing devices, reference may be specifically made to the foregoing embodiments, and details are not described herein again.

It can be known from the foregoing that, according to this embodiment of the present invention, a SIM card of a mobile terminal A is remotely accessed by means of NFC, so as to acquire information in the SIM card, and communication is then performed according to the information in the SIM card, thereby achieving wireless communication of the SIM card, so that a communications function can be implemented, with no need to insert the SIM card into a mobile terminal by a user. In addition, because the first device only needs to take charge of reading the SIM card and performing NFC communication, the first device may consume little power, and moreover, may be of a small size, so that it is convenient to carry the first device.

### Embodiment 6

This embodiment of the present invention further provides a communications system. As shown in FIG. 5, the communications system may include a processor 501, a storage unit 502, and a transceiver unit 503.

The processor 501 is configured to remotely access a SIM card of a first device by means of NFC, so as to acquire information in the SIM card; and perform communication according to the information in the SIM card.

The storage unit 502 is configured to store various data, such as the information in the SIM card.

The transceiver unit 503 is configured to receive and send various data, such as the information in the SIM card.

Optionally, the processing unit 501 may be specifically configured to determine, by means of NFG, whether the SIM card of the first device is in position; if the SIM card is in position, acquire the information in the SIM card by means of NFC; and if the SIM card is not in position, end the procedure; optionally, in this case, a user may be reminded that the SIM card of the first device is not in position.

Optionally, the processing unit 501 may be specifically configured to perform network registration with a base station according to the information in the SIM card; and after the network registration succeeds, perform data transmission by using the base station; and/or, may also be configured to perform Internet data transmission according to the information in the subscriber identity module.

Data transmission may be in multiple manners, such as voice communication (making a phone call), SMS message communication, or MMS message communication. That is, the step of "performing data transmission by using the base station" may specifically include:
performing voice data transmission such as voice, an SMS message, or an MMS message by using the base station.

In addition, in order to strengthen protection of personal information, a specific permission may be set for the function of remotely accessing the SIM card by means of NFC, so that the SIM card can be remotely accessed by means of NFC only after the SIM card permits the remote access, that is:
the processor 501 may be further configured to obtain the permission for remotely accessing the SIM card of the first device.

For example, the processor 501 may be specifically configured to send a remote access request to the SIM card of the first device, and receive a remote access accept permission returned by the SIM card; or
the processor 501 may also be specifically configured to receive a remote access invitation sent by the SIM card of the first device, and accept the remote access invitation.

In addition, the processor 501 may further process data in the storage unit 502 and data received by the transceiver unit 503; and the storage unit 502 may also store the data received by the transceiver unit 503, or store data processed by the processing unit 501, and the like.

For specific implementations of the foregoing devices, reference may be made to the foregoing embodiments, and details are not described herein again.

In addition, the communications system may further include other devices, which are not described herein again.

It can be known from the foregoing that, the communications system in this embodiment of the present invention remotely accesses a SIM card of a first device by means of NFC, so as to acquire information in the SIM card, and then performs communication according to the information in the SIM card, thereby achieving wireless communication of the SIM card, so that a communications function can be implemented, with no need to insert the SIM card into a mobile terminal by a user. In addition, because the first device only needs to take charge of reading the SIM card and performing NFC communication, the first device may consume little power, and moreover, may be of a small size, so that it is convenient to carry the first device.

A person of ordinary skill in the art may understand that all or a part of the steps of the methods in the embodiments may be implemented by a program instructing relevant hardware. The program may be stored in a computer readable storage medium. The storage medium may include: a read-only memory (Read-Only Memory, ROM), a random access memory (Random Access Memory, RAM), a magnetic disk, or an optical disc.

A communications method, apparatus, and system based on a SIM card that are provided in the embodiments of the present invention are introduced in detail in the foregoing. Specific examples are used in this specification to describe the principle and implementation manners of the present invention. The descriptions of the foregoing embodiments are merely intended to help understand the method and core idea of the present invention. In addition, a person skilled in the art may, according to the idea of the present invention, make modifications with respect to the specific implementation manners and the application scope. Therefore, the content of this specification shall not be construed as a limitation on the present invention.

## Claims

1. A communications method based on a subscriber identity module, comprising:
remotely accessing a subscriber identity module of a first device by means of near field communication, so as to acquire information in the subscriber identity module; and
performing communication according to the information in the subscriber identity module.

2. The method according to claim 1, wherein the remotely accessing a subscriber identity module of a first device by means of near field communication, so as to acquire information in the subscriber identity module comprises:
determining, by means of near field communication, whether the subscriber identity module of the first device is in position; and
when it is determined that the subscriber identity module of the first device is in position, acquiring the information in the subscriber identity module by means of near field communication.

3. The method according to claim 1, wherein the performing communication according to the information in the subscriber identity module comprises:
performing network registration with a base station according to the information in the subscriber identity module; and
after the network registration succeeds, performing data transmission by using the base station.

4. The method according to claim 1, wherein the performing communication according to the information in the subscriber identity module comprises:
performing Internet data transmission according to the information in the subscriber identity module.

5. The method according to any one of claims 1 to 4, before the remotely accessing a subscriber identity module of a first device by means of near field communication, further comprising:
obtaining a permission for remotely accessing the subscriber identity module of the first device.

6. The method according to claim 5, wherein the obtaining a permission for remotely accessing the subscriber identity module of the first device comprises:
sending a remote access request to the subscriber identity module of the first device, and receiving a remote access accept permission returned by the subscriber identity module; or
receiving a remote access invitation sent by the subscriber identity module of the first device, and accepting the remote access invitation.

7. A communications apparatus based on a subscriber identity module, comprising:
an access unit, configured to remotely access a subscriber identity module of a first device by means of near field communication, so as to acquire information in the subscriber identity module; and
a communications unit, configured to perform communication according to the information in the subscriber identity module.

8. The communications apparatus based on a subscriber identity module according to claim 7, wherein
the access unit is specifically configured to determine, by means of near field communication, whether the subscriber identity module of the first device is in position; and when determining that the subscriber identity module of the first device is in position, acquire the information in the subscriber identity module by means of near field communication.

9. The communications apparatus based on a subscriber identity module according to claim 7, wherein the communications unit comprises a registration subunit and a transmission subunit, wherein
the registration subunit is configured to perform network registration with a base station according to the information in the subscriber identity module; and
the transmission subunit is configured to: after the network registration succeeds, perform data transmission by using the base station.

10. The communications apparatus based on a subscriber identity module according to claim 7, wherein
the communications unit is specifically configured to perform Internet data transmission according to the information in the subscriber identity module.

11. The communications apparatus based on a subscriber identity module according to any one of claims 7 to 10, further comprising a permission unit, wherein
the permission unit is configured to obtain a permission for remotely accessing the subscriber identity module of the first device.

12. The communications apparatus based on a subscriber identity module according to any one of claims 7 to 11, wherein
the permission unit is specifically configured to send a remote access request to the subscriber identity module of the first device, and receive a remote access accept permission returned by the subscriber identity module; or
the permission unit is specifically configured to receive a remote access invitation sent by the subscriber identity module of the first device, and accept the remote access invitation.

13. A communications system, comprising the communications apparatus based on a subscriber identity module according to any one of claims 7 to 12.
